# EUROPEAN PATENT APPLICATION

(11) **EP 0 980 775 A1**
(43) Date of publication of application: **23.02.2000**
(21) Application number: 98202768.2
(22) Date of filing: 18.08.1998
(51) Int. Cl.: B60J 1/20, B60J 11/00

(54) **Screen mountable to the door of a vehicle**

(71) Applicant: Chen, Tsen-Shen, Wufeng Hsiang, Taichung Hsien (TW)
(72) Inventor: Chen, Tsen-Shen, Wufeng Hsiang, Taichung Hsien (TW)
(74) Representative: Hooiveld, Arjen Jan Winfried

(57) **Abstract**

A screen mountable to a vehicle's door (20) includes a net cap (10) which has an opening (12) defined by a fastening member (13) which is expandable so as to securely mounted the net cap (10) to the vehicle's door. A magnet (15) is used to adhered to the vehicle's door (20) to further position the net cap (10) to the vehicle's door (20).

## Description

The present invention relates to a screen, and more particularly, to a screen which is mounted to the frame of a vehicle's door and has a net structure so as to ventilate the interior of the vehicle by lowering the window of the door without bugs entering.

Vehicles such as sedans generally have four doors each of which includes a frame with a window slidably received therein so that the driver may lower the window when the driver wants outside air to enter the interior of the sedan. In a hot or polluted area, the drivers are forced to close the window and start the air conditioner. In areas where air is cool and fresh, the driven tend to lower the window and let outside air enter the interior of the vehicle. However, bugs fly into the vehicle via the window.

The present invention intends to provide a net screen which is mountable to the frame of the vehicle's door whose window is lowered. The screen prevents bugs or the like from entering the vehicle and allows air to flow into the interior of the vehicle so that the disadvantages described above are mitigated.

In accordance with one aspect of the present invention, a screen is used to mount to a vehicle's door and comprises a net cap having an opening defined by a fastening member.

An object of the present invention is to provide a screen which is easily mounted to the door whose window is lowered so as to let outside air enter the interior of the vehicle without bugs flying into the interior via the window.

Further objects, advantages, and features of the present invention will become apparent from the following detailed description with appropriate reference to the accompanying drawings.
In the drawings:
Fig. 1 is a perspective view of the screen in accordance with the present invention;
Fig. 2 is an illustrative view to illustrate how the screen is to be mounted to the door of a vehicle with cooperation of the magnet.
Fig. 3 is a perspective view to show how the screen is mounted to the door of the vehicle as shown in Fig. 2, and
Fig. 4 is a perspective view of another embodiment of the screen in accordance with the present invention.

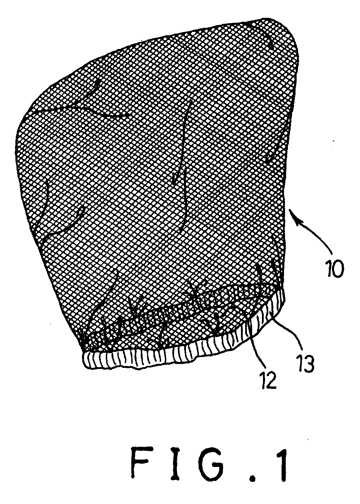

For a better understanding of the present invention, reference is made to Fig. 1 which illustrates the screen of the present invention. The screen is a soft, deformable net cap 10 and has an opening 12 which is defined by a loop of a fastening member 13 which is expandable.

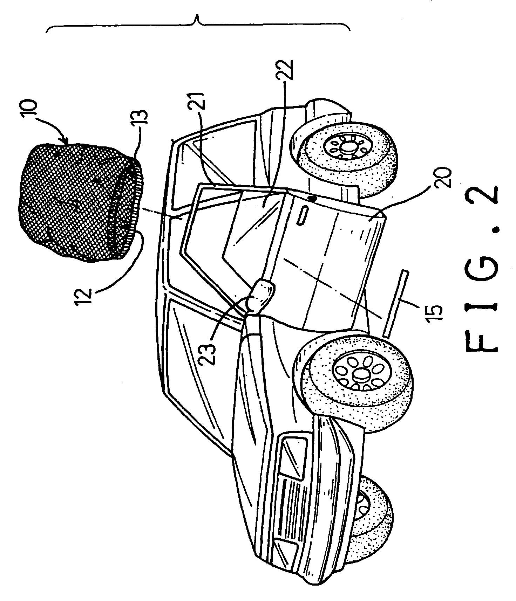

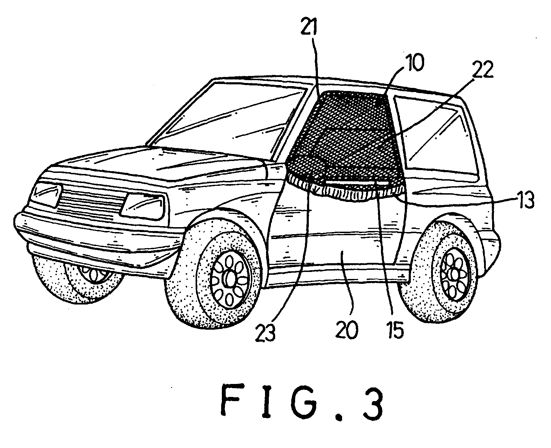

Referring to Figs. 2 and 3, the net cap 10 is mounted to the door 20 of the vehicle from the top with the opening 12 receiving the upper frame 21 of the door 20 therein. The outside mirror 23 is received in the net cap 10 and the fastening member 13 wrapped round the upper portion of the door 20. The net cap 10 is so thin that the net cap 10 can be clamped between the door and the outer frame of the door 20. A magnet 15 is further used to adhered to the outside of the door 20 to position the net cap 10 to the door 20. Therefore, the window 22 of the door 20 can be lowered to let fresh air enter the interior of the vehicle and bugs are prevented by the net cap 10.

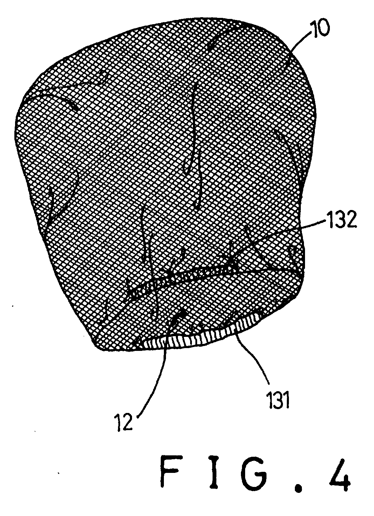

Referring to Fig. 4, in order to avoid the fastening member from being severely clamped and damaged between the door 20 and the outer door frame of the door, the fastening member includes two parts 131, 132 which are connected to the periphery defining the opening 12 separately so that when the net cap 10 is mounted to the door 20 as shown in Fig. 3, the two parts 131, 132 of the fastening member will not be clamped.

The screen of the present invention is soft and deformable so that it is easily used and stored. The screen can perform as a sunshield also.

Although the invention has been explained in relation to its preferred embodiment it is to be understood that many other possible modifications and variations can be made without departing from the spirit and scope of the invention as hereinafter claimed.

## Claims

1. A screen mountable to a vehicle's door, comprising:
a net cap (10) having an opening (12) which is defined by a fastening member (13).

2. The screen as claimed in claim 1 further comprising a magnet (15) which is adapted to position said net cap (10) to said vehicle's door.

3. The screen as claimed in claim 1, wherein said fastening member (13) is a loop member.

4. The screen as claimed in claim 1, wherein said fastening member (13) includes two parts (131, 132) connected to said net cap (10) separately.

5. The screen as claimed in claim 1, wherein said net cap (10) is deformable.
